# EUROPÄISCHE PATENTSCHRIFT

(11) **EP 1 511 663 B1**
(45) Veröffentlichungstag und Bekanntmachung des Hinweises auf die Patenterteilung: **13.09.2006**
(21) Anmeldenummer: 03735422.2
(22) Anmeldetag: 20.05.2003
(51) Int. Cl.: B62D 1/16, B62D 6/00

(54) **ÜBERLAGERUNGSGETRIEBE FÜR EINE ÜBERLAGERUNGSLENKUNG**
DIFFERENTIAL DRIVE FOR A SUPERIMPOSED STEERING SYSTEM
BOITE DE SUPERPOSITION POUR DIRECTION A SUPERPOSITION

(30) Priorität: 24.05.2002 DE 10223049; 17.12.2002 DE 10259274
(43) Veröffentlichungstag der Anmeldung: 09.03.2005
(73) Patentinhaber: Continental Teves AG & Co. oHG, 60488 Frankfurt am Main (DE)
(72) Erfinder: BAYER, Ronald, 63165 Mühlheim/Main (DE); JUNGBECKER, Johann, 55576 Badenheim (DE); LINKENBACH, Steffen, 65760 Eschborn (DE); NELL, Joachim, 63452 Hanau (DE); MUTH, Norman, 35066 Frankenberg (DE)
(86) Internationale Anmeldenummer: PCT/EP2003/005289
(87) Internationale Veröffentlichungsnummer: WO 2003/099630

(56) Entgegenhaltungen:
- DE-A- 10 000 219
- DE-A- 19 823 031
- PATENT ABSTRACTS OF JAPAN Bd. 1999, Nr. 08, 30. Juni 1999 (1999-06-30) & JP 11 072128 A (AICHI CORP), 16. März 1999 (1999-03-16)

## Beschreibung

Die Erfindung betrifft eine Verriegelungseinrichtung und ein Überlagerungsgetriebe für eine Überlagerungslenkung, bei der ein vom Fahrer eingegebener Lenkwinkel nach Maßgabe von Stellgrößen durch eine Steuerung mit einem weiteren Winkel überlagert werden kann, wobei in Abhängigkeit von weiteren Stellgrößen, die einen Betriebszustand des Fahrzeugs wiedergeben, eine elektromechanische Verriegelung des Überlagerungsgetriebes erfolgt.

Heutige Kraftfahrzeuge, insbesondere Personenkraftwagen, sind in der Regel mit hydraulischen oder elektrohydraulischen Servolenkungen ausgestattet, bei denen ein Lenkrad mechanisch mit den lenkbaren Fahrzeugrädern zwangsgekoppelt ist. Die Servounterstützung ist derart aufgebaut, dass im Mittelbereich des Lenkmechanismus Aktuatoren, z.B. Hydraulikzylinder, angeordnet sind. Durch eine von den Aktuatoren erzeugte Kraft wird die Betätigung des Lenkmechanismus in Reaktion auf die Drehung des Lenkrads unterstützt. Dadurch ist der Kraftaufwand des Fahrers beim Lenkvorgang verringert.

Überlagerungslenkungen sind aus der nachveröffentlichten DE 101 59 800 A1 und der nachveröffentlichten DE 101 59 700 A1 bekannt. Sie sind dadurch charakterisiert, dass dem vom Fahrer eingegebenen Lenkwinkel bei Bedarf ein weiterer Winkel durch einen Aktuator überlagert werden kann. Der zusätzliche Winkel wird durch einen Regler definiert und dient zur Erhöhung der Stabilität und Agilität des Fahrzeugs. Es besteht auch die Möglichkeit, Störgrößen zu kompensieren und den Gradienten Radlenkwinkel über Lenkradwinkel als Funktion der Fahrgeschwindigkeit des Fahrzeugs zu realisieren. Es werden hydraulische oder elektrische Aktuatoren verwendet.

Aus der DE 198 23 031 A1 ist eine Fahrzeuglenkvorrichtung mit einem Überlagerungsgetriebe bekannt, das über einen Formschluss das Lenkrad direkt mit dem Reifen verbindet.

Weiterhin ist aus PATENT ABSTRACTS OF JAPAN Bd. 1999, Nr. 08, 30. Juni 1999 & JP 11 072128 A(AICHI CORP), 16. März 1999 eine Verriegelungseinheit bekannt, die mittels kraftschlüssiger Verbindung einen verriegelten Zustand herstellen kann.

Es ist Aufgabe der Erfindung, ein Überlagerungsgetriebe bzw. eine weitere Verriegelungseinrichtung zu schaffen, bei denen beim Ausfall der Elektronik bzw. der Energieversorgung der Fahrer einen Lenkwinkel auf die Räder des Fahrzeugs aufbringen kann.

Erfindungsgemäß wird diese Aufgabe dadurch gelöst, dass die elektromechanische Verriegelung in zwei Stufen derart erfolgt, dass das Überlagerungsgetriebe mittels Kraftschluss abgebremst wird und bei Bedarf mittels Formschluss verriegelt wird.

Bei dem Überlagerungsgetriebe kann über eine Überlagerung mit einem weiteren Winkel hinaus, zusätzlich oder gleichzeitig die Übersetzung vorteilhaft verändert werden. Das Überlagerungsgetriebe der Überlagerungslenkung nach der Erfindung ermöglicht insbesondere einen sicheren und komfortablen Betrieb.

Vorteilhaft ist, dass zum Erkennen des Betriebszustandes Größen, wie Zündung an/aus, Motordrehzahl und dergleichen, überwacht werden und dass zum Erkennen, ob der Motor ausgeschaltet ist oder nicht bzw. eine Energieversorgung gewährleistet ist oder nicht, die Größen analysiert werden. Dabei wird die Plausibilität der Motorlage und der Sensorsignale überwacht, zwecks Erhöhung der Betriebsicherheit.

Die Aktivierung der Verriegelung erfolgt dabei vorzugsweise geschaltet und besonders bevorzugt gleichzeitig für die kraftschlüssige und formschlüssige Verriegelung.

Eine weitere vorteilhafte Ausbildung besteht darin, dass die kraftschlüssige Verriegelung durch mindestens einen, vorzugsweise 3 bis 9, ersten Klemmkörper erfolgt, der mit einem Innenring des Freilaufs durch eine radiale Betätigung reibschlüssig in Kontakt gebracht wird und die formschlüssige Verriegelung durch mindestens einen, vorzugsweise 3 bis 9, zweiten Klemmkörper erfolgt, der durch eine radiale Betätigung mit dem Innenring des Freilaufs formschlüssig in Kontakt gebracht wird.

Darüber hinaus ist es vorteilhaft, dass dem Freilauf ein erster Betätigungsring für den Formschluss und ein zweiter Betätigungsring für den Kraftschluss zugeordnet ist, die bei einer radialen Betätigung der Klemmkörper mit diesen mitgeschleppt werden, so dass mittels einer Klemmkontur an einem Außenring des Freilaufs der Innenring an einer Drehbewegung gehindert wird. Vorteilhaft wird dabei durch die reibschlüssige Verbindung ein bestimmter Winkel Verdrehwinkel zugelassen, bevor ein Formschluss entsteht.

Die Aufgabe wird auch durch eine Verriegelungseinrichtung nach dem Anspruch 5 gelöst, die vorzugsweise für ein Überlagerungsgetriebe der zuvor beschriebenen Art vorgesehen ist.

Die Aktivierung der Verriegelung erfolgt dabei vorzugsweise geschaltet und besonders bevorzugt gleichzeitig für die kraftschlüssige und formschlüssige Verriegelung.

Vorteilhaft ist es vorgesehen, dass die kraftschlüssige Verriegelung durch mindestens einen, vorzugsweise 3 bis 9, ersten Klemmkörper erfolgt, der mit einem Innenring eines Freilaufs durch eine radiale Betätigung reibschlüssig in Kontakt gebracht wird und die formschlüssige Verriegelung durch mindestens einen, vorzugsweise 3 bis 9, zweiten Klemmkörper erfolgt, der durch eine radiale Betätigung mit dem Innenring des Freilaufs formschlüssig in Kontakt gebracht wird.

Vorzugsweise ist der erste Klemmkörper elastisch angeordnet und lässt einen bestimmten Winkel Verdrehwinkel zu.

Nach der Erfindung ist es vorgesehen, dass dem Freilauf ein erster Betätigungsring für den Kraftschluss oder Reibschluss und ein zweiter Betätigungsring für den Formschluss zugeordnet ist, die bei einer radialen Betätigung der Klemmkörper mit diesen mitgeschleppt werden, so dass mittels einer Klemmkontur an einem Außenring des Freilaufs der Innenring an einer Drehbewegung gehindert wird.

Es ist vorteilhaft vorgesehen, dass die Verriegelung durch einen elektromechanischen Wandler erfolgt, der einen erstes Betätigungselement für den Kraftschluss oder Reibschluss und ein zweites Betätigungselement für den Formschluss aufweist, welche Betätigungselemente auf die Klemmkörper einwirken und entgegen einer Federkraft durch einen elektromagnetisch betätigbaren Anker bewegt werden, zwecks Verriegelung bzw. Entriegelung des Freilaufs. Durch diese Ausgestaltung der Erfindung ist es möglich, mit sehr geringen Stell- und Haltekräften, somit nur geringer (elektrischer) Energie, ein zu verriegelndes Element sicher zu fixieren bzw. zu verriegeln. Dadurch wird auch nur ein geringer Bauraum benötigt.

Erfindungsgemäß weist der Freilauf eine abgestufte Kontur auf, so dass der Innenring zuerst durch einen Reibschluss gehalten wird.

Ausführungsbeispiele der Erfindung sind in den Zeichnungen dargestellt und werden im folgenden näher beschrieben.

Es zeigen:
- Fig. 1: die erfindungsgemäße Überlagerungslenkung in einem schematischen Überblick,
- Fig. 2: eine schematische Darstellung eines Planetengetriebes mit einem Freilauf und einer Verriegelungseinrichtung nach der Erfindung,
- Fig. 3: den Freilauf mit Verriegelungseinrichtung,
- Fig. 4: den Freilauf in einer perspektivischen Darstellung,
- Fig. 5: einen Ausschnitt des Freilaufs mit Verriegelungseinrichtung in einer Draufsicht,
- Fig. 6: einen ersten Ausschnitt des Freilaufs mit Verriegelungseinrichtung,
- Fig. 7: einen zweiten Ausschnitt des Freilaufs mit Verriegelungseinrichtung,
- Fig. 8: einen Ausschnitt des Freilaufs in einer Seitenansicht,
- Fig. 9: einen Ausschnitt des Freilaufs mit Verriegelungseinrichtung im unbestromten Zustand, und
- Fig. 10: einen Ausschnitt des Freilaufs mit Verriegelungseinrichtung im bestromten Zustand.

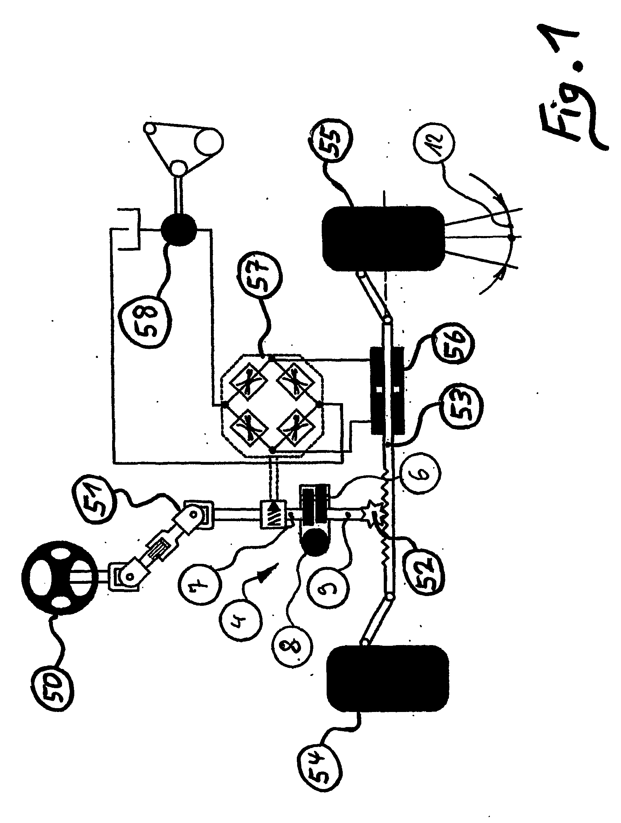

Die in Fig. 1 gezeigte Überlagerungslenkung weist ein Handlenkrad 50 auf, das über eine Lenksäule 51, in die ein Überlagerungsgetriebe 6 eingefügt ist, über ein Lenkgetriebe 52 mit einer Lenkstange 53 verbunden ist. Durch Verschieben der Lenkstange 53 sind die Räder 54,55 verschwenkbar. Das Verschwenken der Räder 54,55 wird unterstützt mittels einer hydraulischen Einheit 56 und durch eine entsprechende Regelung des hydraulischen Drucks mittels einer Ventileinheit 57. Der Druck wird durch eine Pumpe 58 erzeigt.

Die Funktion eines Überlagerungsgetriebes 6 in der in Fig. 1 gezeigten Überlagerungslenkung besteht darin, einen Überlagerungswinkel 12 unabhängig vom Fahrer über eine Steuerung mittels Stellgrößen, die z.B. von einem Fahrdynamiksystem (ESP Regler) erzeugt werden können, einzustellen. Dazu wird vorzugsweise ein Planetengetriebe mit 2 Sonnen sowie 3 Stufenplaneten, wie es in der DE 101 59 800 A1 bzw. der DE 101 59 700 A1 beschrieben ist, verwendet. Die Stufenplaneten sind in einem Planetenträger (Käfig) gelagert. Die Erfindung ist jedoch ausdrücklich nicht auf ein Planetengetriebe als Überlagerungsgetriebe 6 beschränkt. So können auch sämtliche andere bekannte Summiergetriebe verwendet werden.

Die Übersetzung der Fahrzeuglenkung setzt sich aus den Übersetzungen des Lenkgetriebes und des Überlagerungsgetriebes zusammen. Soll die Übersetzung des Fahrzeugs auf eine bestimmte Übersetzung verändert werden, muss ein Bauteil des Überlagerungsgetriebes zusätzlich angetrieben werden. Dieser Antrieb erfolgt über einen Elektromotor (E-Motor) 8, wodurch die Übersetzungsänderung in einem breiten Bereich möglich ist.

Die Anbindung des Motors 8 an das Getriebe 6, so im Fall eines Planetengetriebes an den Planetenkäfig, kann mit einem selbsthemmenden Getriebe (Schnecken- oder Schraubgetriebe) oder einem nicht selbsthemmenden Getriebe (Zugmittel- oder Zahnradgetriebe) erfolgen, vorzugsweise aber wird ein Zugmittelgetriebe, insbesondere ein Riemengetriebe, eingesetzt.

Um in Betriebszuständen, in denen der Motor 8 ausgeschaltet ist, eine feste Übersetzung zu realisieren, ist es zwingend notwendig, das Überlagerungsgetriebe 6 zu fixieren. Bei einem Planetengetriebe wird dazu der Käfig am Drehen gehindert.
Dies ist durch eine Verriegelung der zu verriegelnden Getriebebauteile, bei einem Planetengetriebe des Käfigs, z.B. gegenüber einem ortsfesten Gehäuse möglich, wobei eine erste Getriebewelle (Getriebeeingangswelle) 7 mit einer zweiten Getriebewelle (Getriebeausgangswelle) 9 direkt verbunden wird durch Übertragungsmittel, insbesondere über die Planeten des Getriebes. Im Sinne der Erfindung ist es vorgesehen, dass der Käfig des Planetengetriebes in Abhängigkeit von den Betriebszuständen form- und kraftschlüssig verriegelbar ist.

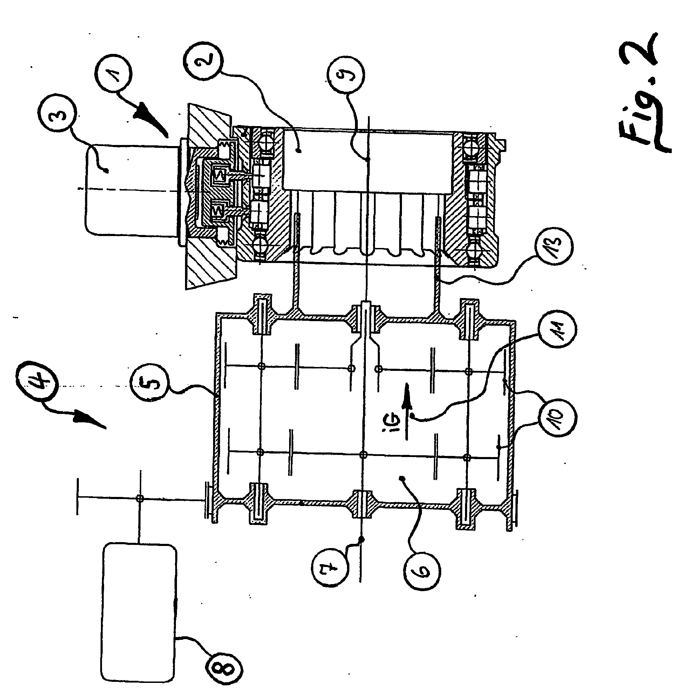

In Fig. 2 ist die Verriegelungseinrichtung mit einem Freilauf und mit einem Planetengetriebe als Überlagerungsgetriebe schematisch näher dargestellt.

Die Verriegelungseinheit 1 weist eine elektromechanische Betätigungseinheit 3, und einen form- und kraftschlüssigen Freilauf 2 auf. Die Verriegelungseinheit 1 ist über eine Kupplung 13 formschlüssig mit dem Getriebegehäuse 5 gekoppelt. Vorzugsweise wird hier die Verriegelungseinheit 1 innerhalb einer elektromechanische Überlagerungslenkung (ESAS) (4) für Kraftfahrzeuge verwendet. Andere Anwendungsbereiche mit ähnlichen sicherheitsrelevanten Anforderungen sind für die Verriegelungseinheit 1 ebenso denkbar.

In der oben genannten Anwendung wird das Getriebegehäuse 5 des Überlagerungsgetriebes 6 im nicht aktivierten Zustand oder im Fehlerfall durch die Verriegelungseinheit 1 blockiert. Somit erfolgt ein Durchgriff der beiden Getriebewellen 7,9 über das Planetengetriebe 10 mit einem Übersetzungsverhältnis iG 11 in einem Bereich von ca. 1:1,0 bis ca. 1:1,2, vorzugsweise 1:1,1 oder 1:1,2. Die Lenkwinkelüberlagerung 12 ist dabei blockiert.

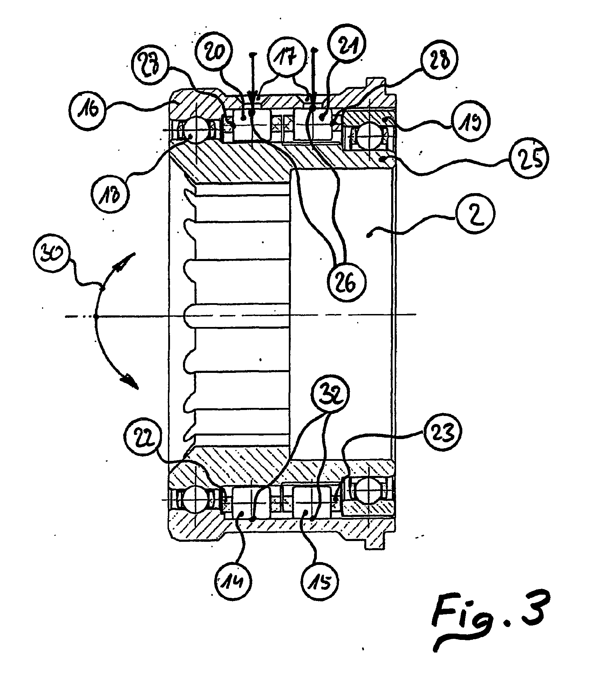

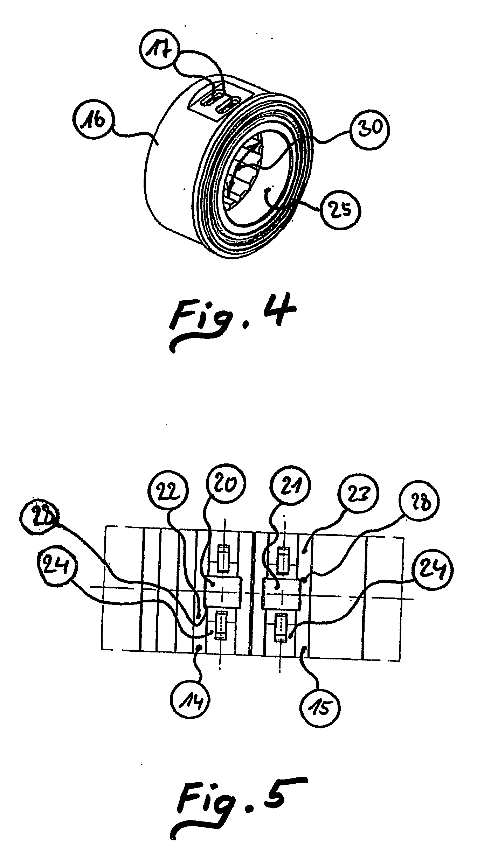

Der Freilauf 2 und die benachbarten Bauteile der Verriegelungseinheit 1 sind in der Fig. 3 bis Fig. 8 näher dargestellt. Die erfindungsgemäße Verriegelungseinheit 1 ist ein funktionsrelevantes Bauteil. Im stromlosen Zustand der elektromechanischen Betätigungseinheit 3 ist der Freilauf 2 über den einen kraftschlüssigen Freilauf 14 und einen formschlüssigen Freilauf 15 verriegelt.

Der Freilauf 2 weist im wesentlichen einen Außenring 16, einen Betätigungsdurchgriff 17, ein Festlager 18, ein Loslager 19, einen Klemmkörper 20 für einen Reibschluss, einen Klemmkörper 21 für einen Formschluss, einen Betätigungsring 22 für den Reibschluss, einen Betätigungsring 23 für den Formschluss, ein Federelement 24 und einen Innenring 25 auf.

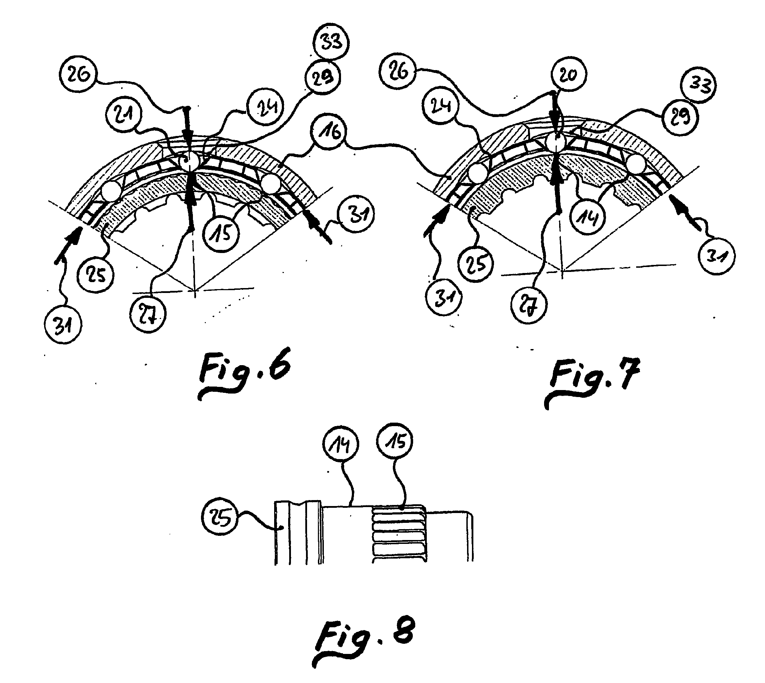

Werden die Klemmkörper 20,21 mit einer Betätigungskraft 26 entgegen der durch die Federelemente 24 hervorgerufenen Federkraft 27 radial betätigt, so kommen die Klemmkörper 20,21 mit dem rotierenden oder stehenden Innenring 25 reib- und formschlüssig in Kontakt (siehe Fig. 6 und 7). Durch den Reib- und Formschluss werden die beiden Betätigungsringe 22,23 durch die Federkraft 27 und den Formschluss 28 und Kraftschluss mit den Klemmkörpern 20,21 mitgeschleppt. Hierdurch klemmen die Klemmkörper 20,21 mittels der im Außenring 16 eingebrachten Klemmkontur 29 zwischen den Außenring 16 und den Innenring 25 und blockieren beidseitig eine weitere Drehbewegung 30 des Innenringes 25.

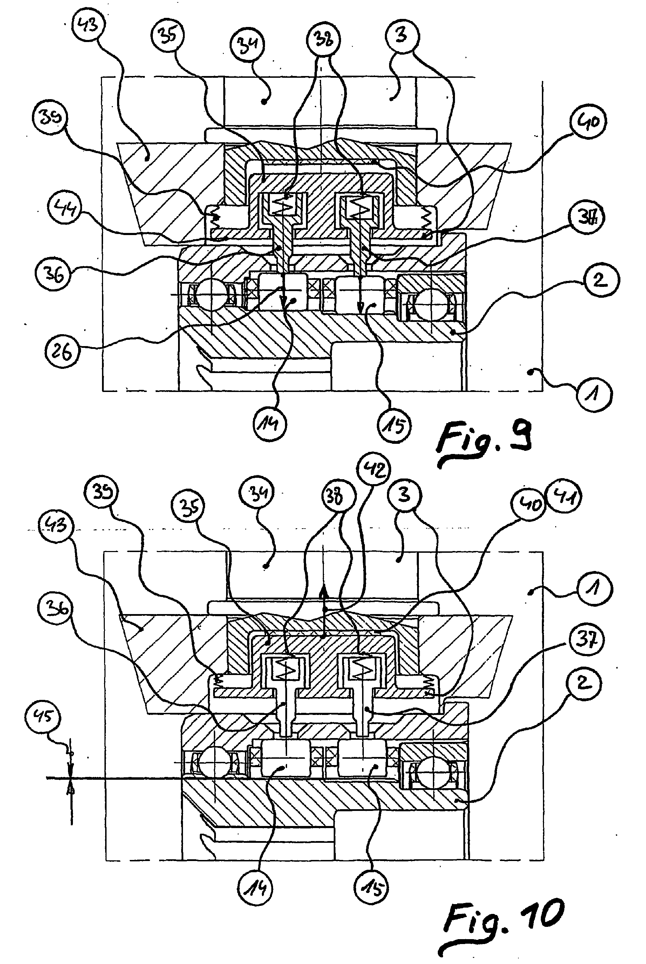

Wird die Betätigungskraft 26 wieder gelöst, so wird durch die einwirkende Federkraft 27 ein Rückstellmoment 31 an den Betätigungsringen 21,22 erzeugt und die Klemmkörper 20,21 werden beim Umkehren der Drehbewegung 30 in ihre Nulllage 32 zurückgestellt. Das durch die Federelemente 24 erzeugte Rückstellmoment der Betätigungsringe 22,23 wird hier durch eine spezielle Kontur 33 der Klemmkontur 29 in der Nulllage 32 erhöht. Durch die in Fig. 2 bis Fig. 8 dargestellte Ausführungsform ist eine hohe Funktionalität des Freilaufes 2 gegeben und ein sicheres Entriegeln im nicht betätigten Zustand wird gewährleistet. Die Betätigungseinheit 3 der Verriegelungseinheit 1 ist in Fig. 9 und Fig. 10 näher dargestellt. Diese soll ein sicheres Verriegeln des Freilaufes 2 durch Form- und Reibschluss gewährleisten.

Die Betätigungseinheit 3 besteht im wesentlichen aus einem elektromechanischen Wandler 34, einem Anker 35, einem Betätigungselement 36 für Reibschluss, einem Betätigungselement 37 für Formschluss', einer Druckfeder 38 und einer Ankerfeder 39.

Im bestromten Zustand (siehe Fig. 10) wird der Anker 35 gegen ein integriertes Federelement 39 von dem elektromechanischen Wandler 34 angezogen und hält mittels eines integrierten Anschlages 40 die beiden Betätigungselemente 36,37 in der Entriegelungsstellung 41. Beide Freiläufe 14,15 befinden sich in entriegelter Stellung. Der Innenring 25 kann somit frei drehen. Der Anker 35 ist mit dem elektromechanischen Wandler 34 nicht formschlüssig verbunden und wird allein über elektromagnetische Luftspaltkräfte 42 angezogen und gehalten. Wird der elektromechanische Wandler aus mechanischen Gründen vom Gehäuse 43 getrennt, so wird durch die nicht mechanische Kopplung mit dem Anker 35 dieser sofort den Freilauf 2 mittels der Ankerfeder 39 verriegeln.

Fällt der Strom an dem elektromechanischen Wandler 34 ab, so drückt die am Anker 35 integrierte Ankerfeder 39 den Anker 35 nach unten in die Verriegelungsstellung 44 (siehe Fig. 9). Durch die einwirkenden Betätigungskräfte 26 werden beide Freiläufe 14,15 aktiviert und verriegeln den Innenring 25 des Freilaufes 2. Der Freilauf 2 ist durch einen abgestuften Durchmesser 45 des Form- und Reibschlusses 14,15 so ausgeführt, dass der Reibschluss 14 den Innenring 25 zuerst blockiert. Bei einem Kriechen des Reibschlusses wird das mit der Druckfeder 38 belastete Betätigungselement des Formschlusses 37 den Klemmkörper 21 nachschieben und den formschlüssigen Freilauf 15 sicher verriegeln.Die Sicherheit ist dadurch optimiert, dass keine mechanische Kopplung zwischen dem elektromechanischen Wandler 34 und dem Anker 35 besteht.

Somit ist in jeder Situation ein sicheres Verriegeln durch die erfindungsgemäße Integration eines form- und kraftschlüssigen Freilaufes 14,15 gewährleistet und bewirkt eine hohe Funktionssicherheit der elektromechanischen Betätigungseinheit 3, wobei durch den Kraftschluss vorteilhaft der Planetenkäfig "abgebremst" wird.

### Bezugszeichenliste

- 1: Verriegelungseinheit
- 2: Freilauf
- 3: Betätigungseinheit
- 4: Überlagerungslenkung
- 5: Getriebegehäuse
- 6: Überlagerungsgetriebe
- 7: Erste Getriebewelle
- 8: Elektromotor
- 9: Zweite Getriebewelle
- 10: Planetengetriebe
- 11: Übersetzungsverhältnis
- 12: Lenkwinkelüberlagerung
- 13: Kupplung
- 14: kraftschlüssiger Freilauf
- 15: formschlüssiger Freilauf
- 16: Außenring
- 17: Betätigungsdurchgriff
- 18: Festlager
- 19: Loslager
- 20: Klemmkörper Reibschluss
- 21: Klemmkörper Formschluss
- 22: Betätigungsring Reibschluss
- 23: Betätigungsring Formschluss
- 24: Federelement
- 25: Innenring
- 26: Betätigungskraft
- 27: Federkraft
- 28: Formschluss
- 29: Klemmkontur
- 30: Drehbewegung
- 31: Rückstellmoment
- 32: Nulllage
- 33: Kontur
- 34: Elektromechanischer Wandler
- 35: Anker
- 36: erstes Betätigungselement
- 37: zweites Betätigungselement
- 38: Druckfeder
- 39: Ankerfeder
- 40: Anschlag
- 41: Entriegelungsstellung
- 42: Luftspaltkräfte
- 43: Gehäuse
- 44: Verriegelungsstellung
- 45: abgestuften Durchmesser
- 50: Handlenkrad
- 51: Lenksäule
- 52: Lenkgetriebe
- 53: Lenkstange
- 54: Rad
- 55: Rad
- 56: Hydraulische Einheit
- 57: Ventileinheit
- 58: Pumpe

## Patentansprüche

1. Überlagerungsgetriebe (6) für eine Überlagerungslenkung, bei der ein vom Fahrer eingegebener Lenkwinkel nach Maßgabe von Stellgrößen durch eine Steuerung mit einem weiteren Winkel (12) überlagert werden kann, wobei
in Abhängigkeit von weiteren Stellgrößen, die einen Betriebszustand des Fahrzeugs wiedergeben, eine elektromechanische Verriegelung (1) des Überlagerungsgetriebes (6) erfolgt, **dadurch gekennzeichnet, dass** die elektromechanische Verriegelung (1) in zwei Stufen derart erfolgt, dass das Überlagerungsgetriebe (6) mittels Kraftschluss (14) abgebremst wird und bei Bedarf mittels Formschluss (15) verriegelt wird.

2. Überlagerungsgetriebe nach Anspruch 1,
**dadurch gekennzeichnet, dass** zum Erkennen des Betriebszustandes des Fahrzeugs Größen überwacht und analysiert werden, die angeben, ob der Motor (8) ausgeschaltet ist oder nicht bzw. ob eine Energieversorgung gewährleistet ist oder nicht.

3. Überlagerungsgetriebe nach Anspruch 2,
**dadurch gekennzeichnet, dass** die kraftschlüssige Verriegelung (14) durch mindestens einen, vorzugsweise 3 bis 9, ersten Klemmkörper (20) erfolgt, der mit einem Innenring (25) des Freilaufs (14) durch eine radiale Betätigung reibschlüssig in Kontakt gebracht wird und die formschlüssige Verriegelung (15) durch mindestens einen, vorzugsweise 3 bis 9, zweiten Klemmkörper (21) erfolgt, der durch eine radiale Betätigung mit dem Innenring (25) des Freilaufs (15) formschlüssig in Kontakt gebracht wird.

4. Überlagerungsgetriebe nach Anspruch 2 oder 3, **dadurch gekennzeichnet, dass** dem Freilauf (15) ein erster Betätigungsring (23) für den Formschluss (37) und ein zweiter Betätigungsring (22) für den Kraftschluss zugeordnet ist, die bei einer radialen Betätigung der Klemmkörper (20,21) mit diesen mitgeschleppt werden, so dass mittels einer Klemmkontur an einem Außenring (16) des Freilaufs der Innenring (25) an einer Drehbewegung gehindert wird.

5. Verriegelungseinrichtung für ein Überlagerungsgetriebe nach einem der Ansprüche 1 bis 4, die einen Freilauf (14) aufweist, der kraftschlüssig verriegelbar ist
**dadurch gekennzeichnet, dass** sie einen weiteren Freilauf (15) aufweist, der formschlüssig (37) verriegelbar ist.

6. Verriegelungseinrichtung nach Anspruch 5,
**dadurch gekennzeichnet, dass** die kraftschlüssige Verriegelung durch mindestens einen, vorzugsweise 3 bis 9, ersten Klemmkörper (20) erfolgt, der mit einem Innenring (25) eines Freilaufs (14) durch eine radiale Betätigung reibschlüssig in Kontakt gebracht wird und die formschlüssige Verriegelung (15) durch mindestens einen, vorzugsweise 3 bis 9, zweiten Klemmkörper (21) erfolgt, der durch eine radiale Betätigung mit dem Innenring (25) des Freilaufs (15) formschlüssig in Kontakt gebracht wird.

7. Verriegelungseinrichtung nach Anspruch 5 oder 6,
**dadurch gekennzeichnet, dass** dem Freilauf (14) ein erster Betätigungsring (22) für den Kraftschluss oder Reibschluss und ein zweiter Betätigungsring (23) für den Formschluss (37) zugeordnet ist, die bei einer radialen Betätigung der Klemmkörper (20, 21) mit diesen mitgeschleppt werden, so dass mittels einer Klemmkontur an einem Außenring (16) des Freilaufs der Innenring (25) an einer Drehbewegung gehindert wird.

8. Verriegelungseinrichtung nach einem der Ansprüche 5 bis 7,
**dadurch gekennzeichnet, dass** die Verriegelung durch einen elektromechanischen Wandler (34) erfolgt, der ein erstes Betätigungselement (36) für den Kraftschluss oder Reibschluss und ein zweites Betätigungselement für den Formschluss (37) aufweist, welche Betätigungselemente auf die Klemmkörper (20, 21) einwirken und entgegen einer Federkraft durch einen elektromagnetisch betätigbaren Anker (35) bewegt werden, zwecks Verriegelung bzw. Entriegelung des Freilaufs.

9. Verriegelungseinrichtung nach einem der Ansprüche 5 bis 8,
**dadurch gekennzeichnet, dass** der Freilauf (2) eine abgestufte Kontur (45) aufweist, so dass der Innenring (25) zuerst durch einen Reibschluss gehalten wird.

## Claims

1. Overriding drive (6) for an overriding steering system, wherein a steering angle inputted by the driver can be overridden by another angle (2) by means of a control according to correcting variables, wherein electromechanical locking (1) of the overriding drive (6) is carried out in dependence on further correcting variables representative of an operating state of the vehicle,
**characterized in that** the electromechanical locking (1) takes place in two steps, **in that** the overriding drive (6) is slowed down by means of operative engagement (14) and is locked by means of positive engagement (15), if required.

2. Overriding drive as claimed in claim 1,
**characterized in that** quantities are monitored and analyzed to detect the operating state of the vehicle, said quantities indicating whether the engine (8) is or is not switched off, or whether energy supply is or is not safeguarded, respectively.

3. Overriding drive as claimed in claim 2,
**characterized in that** operative locking (14) is achieved by means of at least one first clamping member (20), preferably by three to nine clamping members, being brought into frictional contact with an inner ring (25) of the freewheeling mechanism (14) by way of a radial actuation, and positive locking (15) is achieved by means of at least one second clamping member (21), preferably by three to nine clamping members, being brought into a form-fit contact with the inner ring (25) of the freewheeling mechanism (15) by way of a radial actuation.

4. Overriding drive as claimed in claim 2 or 3,
**characterized in that** a first actuating ring (23) is associated with the freewheeling mechanism (15) for the positive connection (37), and a second actuating ring (22) is associated therewith for the operative connection, said rings being entrained with the clamping members (20, 21) upon radial actuation thereof so that rotation of the inner ring (25) is prevented by means of a clamping contour at an outer ring (16) of the freewheeling mechanism.

5. Locking device for an overriding drive as claimed in any one of claims 1 to 4, including a freewheeling mechanism (14) that is lockable in operative engagement,
**characterized in that** the locking device includes another freewheeling mechanism (15) that is positively (37) lockable.

6. Locking device as claimed in claim 5,
**characterized in that** operative locking is achieved by means of at least one first clamping member (20), preferably by three to nine clamping members, being brought into frictional contact with an inner ring (25) of a freewheeling mechanism (14) by way of a radial actuation, and positive locking (15) is achieved by means of at least one second clamping member (21), preferably by three to nine clamping members, being brought into a form-fit contact with the inner ring (25) of the freewheeling mechanism (15) by way of a radial actuation.

7. Locking device as claimed in claim 5 or 6,
**characterized in that** a first actuating ring (22) is associated with the freewheeling mechanism (14) for operative or frictional connection, and a second actuating ring (23) is associated therewith for the positive connection (37), said rings being entrained with the clamping members (20, 21) upon radial actuation thereof, so that rotation of the inner ring (25) is prevented by means of a clamping contour at an outer ring (16) of the freewheeling mechanism.

8. Locking device as claimed in any one of claims 5 to 7,
**characterized in that** locking is effected by an electromechanical transducer (34) that includes a first actuating element (36) for operative or frictional connection and a second actuating element for the positive connection (37), said actuating elements acting on the clamping members (20, 21) and being moved by an electromagnetically operable armature (35) in opposition to a spring force for the purpose of locking or unlocking the freewheeling mechanism, respectively.

9. Locking device as claimed in any one of claims 5 to 8,
**characterized in that** the freewheeling mechanism (2) has a stepped contour (45) so that the inner ring (25) is initially retained by means of frictional connection.

## Revendications

1. Transmission à superposition (6) pour une direction à superposition dans laquelle, à un angle de braquage introduit par le conducteur, peut être superposé un autre angle (12), en fonction de grandeurs de réglage, par une commande, un verrouillage électromécanique (1) de la transmission à superposition (6) s'effectuant en fonction d'autres grandeurs de réglage qui traduisent un état de fonctionnement du véhicule, **caractérisée en ce que** le verrouillage électromécanique (1) s'effectue en deux phases, **en ce que** la transmission de superposition (6) est freinée à force (14) et au besoin verrouillée par complémentarité de formes (15).

2. Transmission à superposition selon la revendication 1, **caractérisée en ce que** pour reconnaître l'état de fonctionnement du véhicule, des grandeurs sont surveillées et analysées, lesquelles indiquent si le moteur (8) est coupé ou non ou si une alimentation en énergie est garantie ou non.

3. Transmission à superposition selon la revendication 2, **caractérisée en ce que** le verrouillage à force (14) s'effectue par au moins un, de préférence 3 à 9 premiers corps de serrage (20), lesquels sont amenés en contact par friction avec une bague intérieure (25) de la roue libre (14), par un actionnement radial, et le verrouillage par complémentarité de formes (15) s'effectue par au moins un, de préférence 3 à 9 seconds corps de serrage (21) qui sont amenés en contact par complémentarité de formes, par un actionnement radial, avec la bague intérieure (25) de la roue libre (15).

4. Transmission à superposition selon la revendication 2 ou 3, **caractérisée en ce qu'**à la roue libre (15) est associée une première bague d'actionnement (23) pour la liaison par complémentarité de formes (37) et une seconde bague d'actionnement (22) pour la liaison à force, lesquelles sont entraînées avec les corps de serrage (20, 21), lors d'un actionnement radial de ceux-ci, ce qui fait qu'au moyen d'un contour de serrage sur une bague extérieure (16) de la roue libre, un mouvement de rotation de la bague intérieure (25) est empêché.

5. Dispositif de verrouillage pour une transmission à superposition selon l'une des revendications 1 à 4, qui comporte une roue libre (14) laquelle peut être verrouillée à force, **caractérisé en ce qu'**il comporte une autre roue libre (15) qui peut être verrouillée par complémentarité de formes (37).

6. Dispositif de verrouillage selon la revendication 5, **caractérisé en ce que** le verrouillage à force s'effectue par au moins un, de préférence 3 à 9 premiers corps de serrage (20), lesquels sont amenés en contact par friction avec une bague intérieure (25) de la roue libre (14), par un actionnement radial, et le verrouillage par complémentarité de formes (15) s'effectue par au moins un, de préférence 3 à 9 seconds corps de serrage (21) qui sont amenés en contact par complémentarité de formes, par un actionnement radial, avec la bague intérieure (25) de la roue libre (15).

7. Dispositif de verrouillage selon la revendication 5 ou 6, **caractérisé en ce qu'**à la roue libre (14) est associée une première bague d'actionnement (22) pour la liaison à force ou la liaison par friction et, une deuxième bague d'actionnement (23) pour la liaison par complémentarité de formes (37), lesquelles sont entraînées avec les corps de serrage (20, 21), lors d'un actionnement radial de ceux-ci, ce qui fait qu'au moyen d'un contour de serrage sur une bague extérieure (16) de la roue libre, un mouvement de rotation de la bague intérieure (25) est empêché.

8. Dispositif de verrouillage selon l'une des revendications 5 à 7, **caractérisé en ce que** le verrouillage s'effectue par un convertisseur électromécanique (34) qui comporte un premier élément d'actionnement (36) pour la liaison à force ou la liaison par friction et un deuxième élément d'actionnement pour la liaison par complémentarité de formes (37), lesquels éléments d'actionnement agissent sur les corps de serrage (20, 29) et sont déplacés à l'encontre d'une force de ressort par une palette (35) à actionnement électromagnétique, en vue du verrouillage ou du déverrouillage de la roue libre.

9. Dispositif de verrouillage selon l'une des revendications 5 à 8, **caractérisé en ce que** la roue libre (2) présente un contour (45) étagé, ce qui fait que la bague intérieure (25) est d'abord maintenue par friction.
